# EUROPEAN PATENT APPLICATION

(11) **EP 2 546 936 A2**
(43) Date of publication of application: **16.01.2013**
(21) Application number: 12175631.6
(22) Date of filing: 10.07.2012
(51) Int. Cl.: H01R 13/717

(54) **Visual indicator device and heat sink for input/output connectors**

(30) Priority: 11.07.2011 US 201113180165
(71) Applicant: Tyco Electronics Nederland B.V., 5222 AR 's-Hertogenbosch (NL); Tyco Electronics Corporation, Berwyn, PA 19312 (US)
(72) Inventor: Van Laarhoven, Antonius Petrus, 5213 SR Hertogenbosch (NL); Walmsley, Michael John, Elizabethtown, PA Pennsylvania 17022 (US); Hooft, Theo, 5268 Helvoirt (NL)
(74) Representative: Grünecker, Kinkeldey, Stockmair & Schwanhäusser

(57) **Abstract**

According to a first aspect of the invention, a visual indicator device for mounting to a printed circuit board is provided, which can be more flexibly adapted to meet individual needs, the visual indicator device comprising a visual indicator and a flexible film circuit with integral circuit traces for electrically connecting the visual indicator to the printed circuit board, wherein the flexible film circuit comprises an adhesive film. According to a second aspect of the invention, a heat sink for at least one input/output connector is provided, which combines thermal and cable management functions, the heat sink comprising a heat exchange section for heat exchange with the at least one input/output connector, the heat sink further comprising a cable management section that is configured to project beyond a mating face of the input/output connector and to manage a cable or a fixture for a cable of a mating input/output connector when the heat exchange section is coupled with the at least one input/output connector.

## Description

### FIELD OF THE INVENTION

The present invention relates to improvements in the field of input/output connectors for high speed electrical and/or optical data interfaces, and in particular to a visual indicator device and a heat sink for such input/output connectors.

### BACKGROUND

Electrical and/or optical data interfaces transmitting data rates in excess of 4.8 Gigabits per second are commonly referred to as high speed data interfaces. A problem associated with such input/output connectors for high speed electrical and/or optical data interfaces is the generation of thermal energy and the management of waste heat during use. The present invention also relates to high speed input/output connector devices furnished with at least one input/output connector and/or at least one visual indicator device and/or at least one heat sink. The input/output connector subject to the invention may be a small form-factor pluggable (SFP/+) port for both telecommunication and data communications applications, which may interface a printed circuit board of a network device to a fiber optic or copper networking cable. SFP is a popular industry format supported by many network component vendors. SFP+ is the module standard developed by a fiber channel group and now the most popular socket on 10 Gigabit Ethernet systems.

Input/output connectors for high speed electrical and/or optical data interfaces are typically mounted to printed circuit boards and used for data connection between two data communication devices. Visual indicator devices are commonly used in order to confirm that two mating input/output connectors have been properly connected and a link between the data communication devices has been established. Visual indicators may be turned on when a circuit is completed between the mating input/output connectors and the communication devices. These visual indicators may also indicate a number of other conditions including the passage of communication signals between the two communication devices, indication of power, or indication that an error in transmitting the signals has occurred.

In conventional Input/output connectors for high speed electrical and/or optical data interfaces, visual indication is achieved by light pipes running over a body or cage of the input/output connector. These light pipes obstruct the airflow encompassing the body or cage of the input/output and deteriorate the dissipation of waste heat from the input/output connector, entailing the risk of thermal damage.

In the field of conventional electrical connectors for (low speed) electrical data interfaces, the document US 5,924,890 A proposed a visual indicator device for an input/output connector for mounting to a printed circuit board, the visual indicator device comprising a visual indicator and a flexible film circuit with integral circuit traces for electrically connecting the visual indicator to the printed circuit board.

A problem arises with the flexible film circuit of said visual indicator device because it is disposed along the surface of an insulative connector housing and is provided with board mounting contact tails proximate to a board mounting face. As it is specifically tailored to its intended use, the flexible film circuit cannot be flexibly adapted to meet individual needs. Hence, this visual indicator device is limited to its intended use and is not suitable for an alternative arrangement.

It is therefore an object of the invention to provide a visual indicator device which can be more flexibly adapted to meet individual needs.

### SUMMARY

The object of the invention has been achieved by providing a visual indicator device for an input/output connector for mounting to a printed circuit board, the visual indicator device comprising a visual indicator and a flexible film circuit with integral circuit traces for electrically connecting the visual indicator to the printed circuit board, wherein the flexible film circuit comprises or is set up on an adhesive film. This visual indicator device may be flexibly configured and adapted to meet individual needs, since the adhesive film allows the flexible film circuit to be easily fixed and electrically connected without separate attachment means. The visual indicator may be positioned within or close to a front panel of an input/output connector housing so as to be visible from outside the front panel. An opening or a transparent or translucent window may be provided in the front panel in a respective position. By virtue of the flat and flexible configuration of the inventive visual indicator device, an airflow encompassing the input/output connector is not obstructed and the dissipation of thermal energy generated during use of the input/output connector is enhanced. The term input/output connector may apply to a connector which only allows unidirectional data transfer in the input or output direction, and to a connector which allows bidirectional data transfer in the input direction as well as in the output direction. The principles of the invention are applicable to all kinds of input/output connectors as well as to all kinds of electrical and/or optical interface ports.

It may prove advantageous to have the flexible film circuit comprise a heat conducting layer and/or a heat absorbing layer and/or a shielding layer, preferably an electromagnetic interference shielding layer, wherein the heat conducting layer and/or the heat absorbing layer and/or the shielding layer is most preferably arranged between the integral circuit traces and the adhesive film and/or on a side of the integral circuit traces opposite the adhesive film. Visual indicators such as LEDs may generate electrical noise signals which may interfere with the signals passing through the interface established by the mating (male and female) input/output connectors. As these connectors may be used for ever-increasing communication signal speeds, the noise interference may become more significant. By providing the shielding layer, the visual indicator device may likewise provide electromagnetic interference shielding in order to prevent or minimize electrical noise interference between the visual indicator and the input/output connectors. If the shielding provided by the shielding layer is efficient enough, a separate shielding for protecting the periphery of the input/output connector against noise interference may be dispensed with. By combining different functions into one element, the number of components and assembly costs of an input/output connector device furnished with the visual indicator device can be reduced while the electromagnetic interference shielding can be improved.

It may turn out beneficial to have the visual indicator device further comprise a connector for electrically connecting the flexible film circuit to the printed circuit board, wherein the connector is preferably block-shaped and most preferably arranged on a narrow side of the flexible film circuit. This connector allows many more options of connecting the flexible film circuit to the printed circuit board as compared to e.g. mounting tails.

It may be useful to have the visual indicator comprise at least one light emitting device, preferably a light emitting diode (LED). These light emitting devices may be used for indicating a number of conditions, e.g. a complete connection or power transmission or data transmission between input/output connectors. LEDs generally have low energy consumption and a long lifetime. The LEDs may also be colour coded to indicate various conditions on either side of the mating input/output connectors.

In may prove advantageous when the input/output connector is a female connector, preferably a jack receptacle connector or socket. This allows a male connector, which is usually provided at the end of a cable, to easily connect to the input/output connector. It may be useful to provide latching means in order to establish a releasable latching engagement between the mating male and female connectors. The female connector may be configured such that the male connector fits and properly connects in only one orientation or position.

An embodiment relates to an input/output connector device comprising at least one visual indicator device according to at least one of the preceding embodiments and at least one input/output connector mounted to a printed circuit board, wherein the adhesive film adheres to the input/output connector and/or to the printed circuit board and/or to a housing or part of a housing of electronic equipment which at least partially accommodates the input/output connector, wherein the adhesive film preferably adheres to a face opposite to a mounting face of the input/output connector and/or to the mounting face of the printed circuit board and/or to an inner side of a front panel of the housing. With the above-identified options, the flexible film circuit as well as the visual indicator attached and electrically connected to the flexible film circuit may be secured in their final position even without auxiliary attachment means.

It may turn out beneficial when the input/output connector projects from the housing of electronic equipment, preferably through an opening in the front panel of the housing. This configuration facilitates the connection of a mating input/output connector with the input/output connector projecting from the housing, as the mating face of the latter is easily accessible.

Another aspect of the claimed invention relates to a heat sink for at least one input/output connector, comprising a (first) heat exchange section for heat exchange with the at least one input/output connector, the heat sink further comprising a cable management section that is configured to project beyond a mating face of the input/output connector and to manage a cable or a fixture for a cable of a mating input/output connector when the heat exchange section is coupled with the at least one input/output connector. The mating face of the input/output connector is defined as the face of the input/output connector to which a mating input/output connector connects. In the case of a male input/output connector, a plug may be formed on the mating face. In the case of a female input/output connector, a plug receiving cavity may be formed on the mating face. The cable fixture may be a strap, cable tie, hook and the like. Any cable fixture for holding, attaching, fixing and/or clamping the cable of a mating input/output connector may be suitable. The cable fixture may be of a kind which can fix and/or release the cable when the mating (male and female) input/output connectors are connected and/or disconnected. Alternatively, the cable fixture may be of a kind which can only fix and/or release the cable when the input/output connectors are disconnected. The cable fixture may partially or fully encircle each one of the cables to be fixed. The heat sink according to the invention turns out to be particularly useful for cooling of input/output connectors of high speed data interfaces with active optical/electrical/copper cable assemblies and the like. Hitherto, thermal and cable management systems are separate functions or modules. The heat sink according to the invention preferably extends through the front panel of the input/output connector housing where it functions as a heat sink. The cable management section is preferably provided outside the input/output connector housing and exposed to ambient air. By dissipating the waste heat received from the input/output connector to ambient air outside of input/output connector housing, the cooling is very efficient. By shaping the part of the heat sink extended outside the input/output connector housing appropriately, the heat sink also functions as a cable management system for organizing one or more cables of mating input/output connectors in order to prevent potential damage by excessive bending. By combining different functions into the inventive heat sink, the number of components and assembly costs of an input/output connector device can be reduced while the thermal performance can be improved. The heat sink may comprise a heat pipe, preferably for conveying a coolant between the heat exchange section and the cable management section. In an embodiment, the cable management section and the heat exchange section may be movable relative to each other. Preferably, the cable management section is at least partially extractable from the heat exchange section and/or retractable into the heat exchange section. This movable configuration may turn out to be useful, e.g. when the cable management section has to be stowed for packaging or transport.

It may turn out beneficial to have the heat sink further comprise another (second) heat exchange section for heat exchange with the periphery, wherein the (first) heat exchange section for heat exchange with the at least one input/output connector is preferably arranged between the cable management section and the (second) heat exchange section for heat exchange with the periphery. This configuration allows dissipating waste heat received from the input/output connector to opposite sides thereof, so that local hot spots by virtue of excessive local heat dissipation can be prevented.

It may also turn out useful to have the heat sink further comprise a cooling plate that is made from heat conductive material, wherein the cooling plate or a part thereof forms the (second) heat exchange section for heat exchange with the at least one input/output connector, wherein a plurality of cooling fins projecting from at least one side of the cooling plate forms the heat exchange section for heat exchange with the periphery, wherein the cooling fins preferably project from a side of the cooling plate that is configured to be coupled with the input/output connector and/or from an opposite side thereof. The cooling plate provides a large contact surface for effective heat exchange with the at least one input/output connector. As the potential heat exchange amount increases with an increasing contact area between the cooling plate and the input/output connector, the contact area should be as large as possible. The cooling fins may be configured in any shape so as to enhance convention on their surfaces.

It may also be of advantage when the (first) heat exchange section for heat exchange with the at least one input/output connector is configured to be coupled with or sandwiched between two input/output connectors. This allows using only one heat sink for accomplishing thermal and cable management of two or more input/output connectors. Accordingly, the number of components and assembly costs of an input/output connector device furnished with the heat sink can be further reduced while the thermal and cable management can be improved.

It may further prove advantageous to have the cable management section comprise a cable fixture, preferably a cable fixture movable relative to a guide, wherein the cable fixture is most preferably displaceable along the guide in the engagement direction and/or in the disengagement direction of the mating input/output connector. The guide may be a post or rod and the like, on which the cable fixture may slide and/or rotate. This cable fixture may be adjusted to support the engagement or disengagement motion of the mating input/output connector, so as to prevent damage to the cable by excessive bending at the time of engagement or disengagement.

It may turn out useful when the cable management section comprises a stopper for restricting movement of the cable fixture in the engagement direction and/or in the disengagement direction of the mating input/output connector. This configuration prevents the cable fixture to fall off the guide when the cable fixture is displaced along the guide in the engagement direction and/or in the disengagement direction of the mating input/output connector cable management section. The stopper may have a secondary function as a radiator for dissipating heat to ambient air. The stopper may be configured in a particular shape so as to enhance convention on its surface.

Another embodiment of the invention relates to an input/output connector device comprising a heat sink according to at least one of the preceding embodiments and two input/output connectors, wherein the (first) heat exchange section for heat exchange with the at least one input/output connector is interposed between and thermally coupled to two input/output connectors, preferably by means of thermally conductive material, most preferably by adhesive thermally conductive material. This embodiment is highly efficient in terms of the use of resources and components, as it provides a combined thermal and cable management system for two input/output connectors with a single element. The two input/output connectors are preferably two parallel input/output connectors, but may also be mating (male and female) input/output connectors. The thermally conductive material should be flexible and configured to fill even cramped confines between the contact surfaces of the heat sink and the input/output connectors, such that the heat transfer between the heat sink and the two input/output connectors may further be enhanced.

Still another embodiment of the invention relates to an input/output connector device comprising at least one input/output connector, at least one visual indicator device according to at least one of the preceding embodiments and at least one heat sink according to at least one of the preceding embodiments. This embodiment combines the first and second aspects of the invention. Reference is made to the comments above.

Further embodiments may result from arbitrary combinations of the features and embodiments disclosed in the claims, drawings and description.

### BRIEF DESCRIPTION OF THE DRAWINGS

Fig. 1 is a schematic view of an input/output connector device according to a first embodiment of the invention, comprising an input/output connector and a visual indicator device having a flexible film circuit with an adhesive film.

Fig. 2 is a schematic view of the flexible film circuit of the visual indicator device according to the first embodiment of the invention.

Fig. 3 is a schematic view of an input/output connector device according to a second embodiment of the invention, comprising an input/output connector and a visual indicator device having a flexible film circuit with an adhesive film and an electromagnetic interference shielding layer.

Fig. 4 is a schematic view of the flexible film circuit of the visual indicator device according to the second embodiment of the invention.

Fig. 5 is a schematic view of an input/output connector device according to a third embodiment of the invention, comprising three input/output connectors and a visual indicator device with three visual indicators.

Fig. 6 is a schematic view of the flexible film circuit of the visual indicator device according to the third embodiment of the invention.

Fig. 7 is a schematic view of an input/output connector device according to a fourth embodiment of the invention, comprising three input/output connectors and two heat sinks.

Fig. 8 is a schematic view of an input/output connector device according to the fourth embodiment of the invention as shown in Fig. 7, wherein two mating input/output connectors are coupled to two of the three input/output connectors.

### DETAILED DESCRIPTION OF THE EMBODIMENT(S)

The embodiments will now be described with reference to the attached drawings.

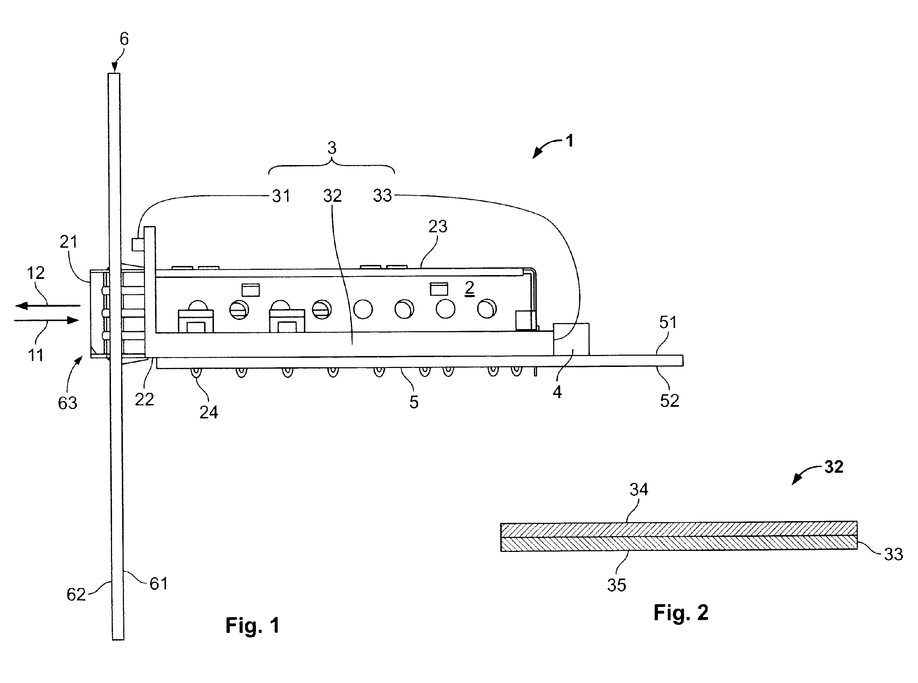

The first embodiment as described with reference to Figs. 1 and 2 relates to a visual indicator device 3 for an input/output connector 2 for mounting to a printed circuit board 5, which may be incorporated into an input/output connector device 1 further comprising the input/output connector 2, a connector 4 for electrically connecting the visual indicator device 3 to the printed circuit board 5 and a housing 6 of electronic equipment which at least partially accommodates the items named above. In the drawings, the housing is represented by a front panel 6. In the case at hand, the input/output connector 2 partially projects from though an opening 63 in the front panel 6 so as to facilitate connection of a mating input/output connector 8. However, alternatively, the input/output connector 2 may be fully located behind the front panel 6 and accessible for connection of a mating input/output connector 8 through the opening 63.

The input/output connector 2 is preferably configured for a high speed electrical and/or optical data interface port such as an SFP+ port. A body of the input/output connector 2 may be fitted into a metal cage. A mounting face 22 of the input/output connector 2 may be mounted to a mounting face 51 of a printed circuit board 5. Data connection between the input/output connector 2 and circuit traces on the printed circuit board 5 may be established by means of mounting pins 24, which may extend through the printed circuit board 5 and project from the lower surface of the printed circuit board 5.

The inventive visual indicator device 3 comprises a visual indicator 31 and a flexible film circuit 32 with integral circuit traces 34 for electrically connecting the visual indicator 31 to the printed circuit board 5. The visual indicator device 3 is schematically shown in Fig. 2. According to the invention, the flexible film circuit 32 comprises or is set up on a flexible adhesive film 35, which may form a substrate of flexible film circuit 32. Preferably, the adhesive film 35 as shown in Fig. 2 is adhesive-backed on its lower surface, wherein the integral circuit traces 34 run on the upper surface of the adhesive film 35. It may suffice that only portions of the adhesive film 35 are adhesive-backed. The adhesive film 35 may be formed of metal and/or plastics, and may be adhesive-backed with conventional adhesives.

According to the first embodiment of the invention, the adhesive film 35 adheres to the mounting face 51 of the printed circuit board 5. The narrow side 33 of the flexible film circuit 32 connects to a block-shaped connector 4, which again connects to circuit traces (not shown) on the mounting face 51 of the printed circuit board 5. In this case, the integral circuit traces 34 of the flexible film circuit 32 and the circuit traces (not shown) on the mounting face 51 of the printed circuit board 5 connect to adjacent sides of the connector 4. As the adhesive film 35 isolates the integral circuit traces 34 from the circuit traces on the mounting face 51 of the printed circuit board 5, there is no risk of bypass. The contact between the block-shaped connector 4 and the integral circuit traces 34 on the one side, and the contact between the block shaped connector 4 and the circuit traces (not shown) on the mounting face 51 of the printed circuit board 5 on the other side, may be established or brought about by, for example, welding, bonding, soldering, conductive gluing or the like. As shown in Fig. 1, the block-shaped connector 4 connects to a portion of the printed circuit board 5 which, as seen from the front panel 6, is located behind the input/output connector 2. The adhesive film 35 of the flexible film circuit 32 adheres to the mounting face 51 of the printed circuit board 5 preferably all the way from the position of the connector 4 to the inner side 61 of the front panel 6, and adheres to the inner side 61 of the front panel 6 up to the position of the visual indicator 31. Hence, the visual indicator 31 is fixed to the inner side 61 of the front panel 6 by the flexible film circuit 32. In order to allow the visual indicator 31 to be visible from the outside 62 of the front panel 6, an opening or window should be provided in the front panel 6 at the respective position of the visual indicator 31. The visual indicator 31 preferably comprises at least one light emitting diode (LED). As shown in Fig. 1, the visual indicator 31 may be located on the adhesive-backed lower surface of the adhesive film 35 and electrically connected to the integral circuit traces 34 on the upper surface of the adhesive film 35 by through-contacting. If favourable, the visual indicator 31 may alternatively be located on the upper surface of the adhesive film 35 so as to facilitate contacting of the integral circuit traces 34.

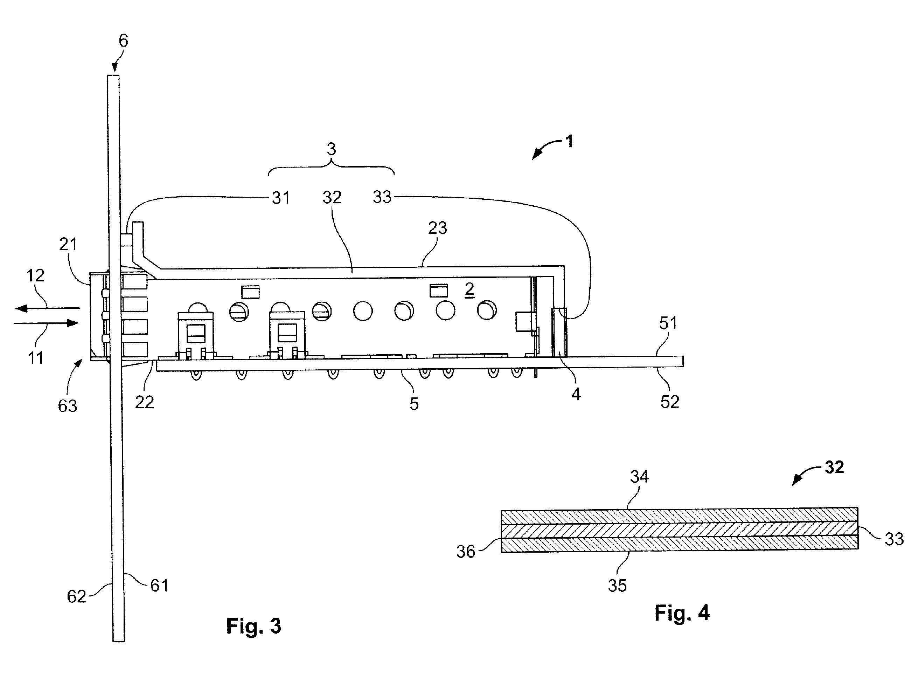

The second embodiment of the invention as described in the following with reference to Figs. 3 and 4 is substantially based on the first embodiment as described above. In order to avoid unnecessary repetitions, similar features as in the first embodiment are provided with similar reference numerals and reference is made to the description above. The following description focuses on the differences from the first embodiment.

Unlike the first embodiment of the invention, the flexible film circuit 32 of the visual indicator device 3 of the second embodiment comprises at least one flexible electromagnetic interference shielding layer 36. The shielding layer 36 is preferably interposed between the integral circuit traces 34 and the adhesive film 35 of the flexible film circuit 32. Hence, the integral circuit traces 34 run on the upper surface of the electromagnetic interference shielding layer 36. The adhesive film 35 may be embodied as a double-sided adhesive film 35 in order to adhere with its upper surface to the lower surface of the flexible electromagnetic interference shielding layer 36. The electromagnetic interference shielding layer 36 protects, on the one side, the input/output connector 2 from electromagnetic interference with the integral circuit traces 34 of the flexible film circuit 32, and, on the other side, protects the periphery, e.g. an adjacent input/output connector 2, against electromagnetic interference caused by operation of the input/output connector 2. Alternatively or additionally, the shielding layer 36 or another flexible electromagnetic interference shielding layer 36 could be disposed on top of the circuit traces 34, wherein the circuit traces 34 are preferably interposed or sandwiched between two electromagnetic interference shielding layers 36. A further alternative flexible film circuit 32 may comprise a heat conductive layer or a heat absorbing layer or heat pipe, which may preferably be arranged between the adhesive film 35 and the circuit traces 34. In such case, the flexible film circuit 32 of the visual indicator device 3 could be used for transferring heat out from the heat exchange face 23 to the front panel 6, thus facilitating and enhancing heat dissipation.

Furthermore, unlike the first embodiment of the invention, the adhesive film 35 adheres to the face 23 of the input/output connector 2 opposite to the mounting face 22 and to the inner side 61 of the front panel up to the position of the visual indicator 31, but not to the printed circuit board 5. The narrow side 33 of the lower end of the flexible film circuit 32 again connects to a block-shaped connector 4, which again connects to circuit traces (not shown) on the mounting face 51 of the printed circuit board 5. This time, however, the integral circuit traces 34 of the flexible film circuit 32 and the circuit traces on the mounting face 51 of the printed circuit board 5 connect to opposite sides of the connector 4. The contact may again be established or brought about by, for example, welding, bonding, soldering, conductive gluing or the like.

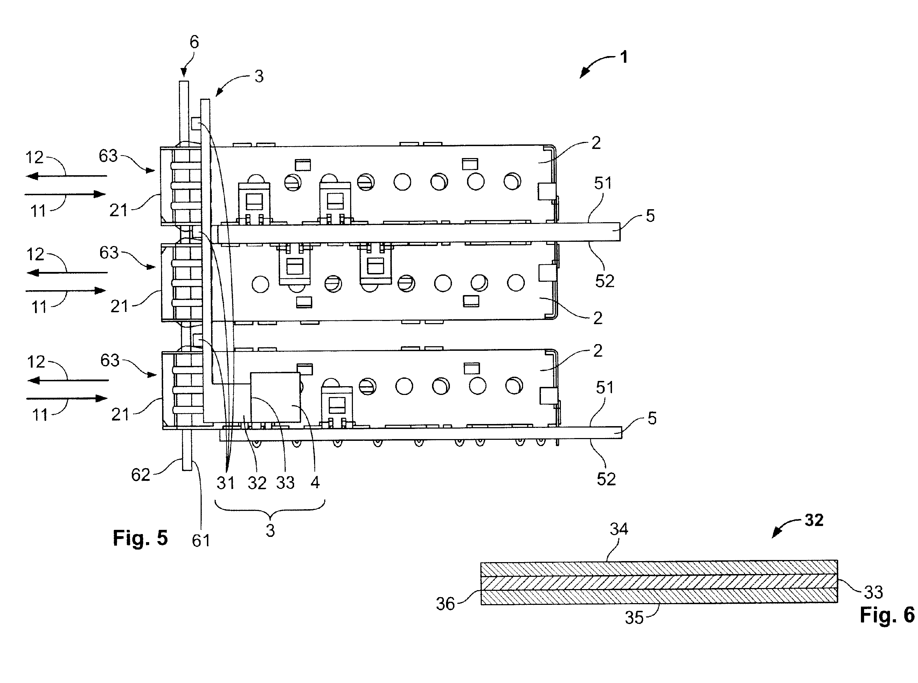

The third embodiment of the invention as described in the following with reference to Figs. 5 and 6 is substantially based on the second embodiment as described above. In order to avoid unnecessary repetitions, similar features are provided with similar reference numerals as in the second embodiment and reference is made to the description above. The following description focuses on the differences from the second embodiment.

Unlike the second embodiment of the invention, the input/output connector device 1 according to the third embodiment comprises three input/output connectors 2 but only one visual indicator device 3 with three visual indicators 31. The structure of the flexible film circuit 32 of the visual indicator device 3 of the third embodiment is similar to the one of the second embodiment, and is shown in Fig. 6. A block-shaped connector 4 disposed at the narrow side 33 of the lower end of the flexible film circuit 32 connects the integral circuit traces 34 of the flexible film circuit 32 to circuit traces (not shown) on the mounting face 51 of the printed circuit board 5, wherein the traces to be connected connect to adjacent sides of the connector 4. As shown in Fig. 5, the block-shaped connector 4 connects to a portion of the printed circuit board 5 which is close to the front panel 6 and next to the input/output connector 2. The adhesive film 35 adheres to the mounting face 51 of the printed circuit board 5 from the position of the connector 4 to the inner side 61 of the front panel 6, and adheres to the inner side 61 of the front panel up to the position of the uppermost visual indicator 31. The three visual indicators 31 are preferably arranged in regular distances starting from the level of the printed circuit board 5, so as to provide visual indication for the three input/output connectors 2. In order to allow the visual indicators 31 to be visible from the outside 62 of the front panel 6, openings or windows should be provided in the front panel 6 at the respective positions of the visual indicators 31.

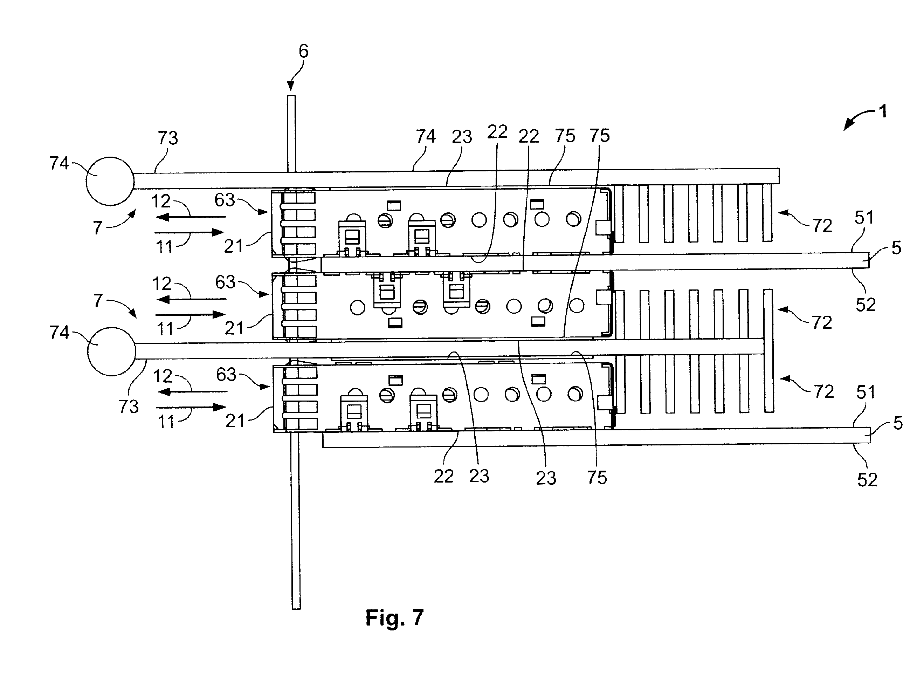

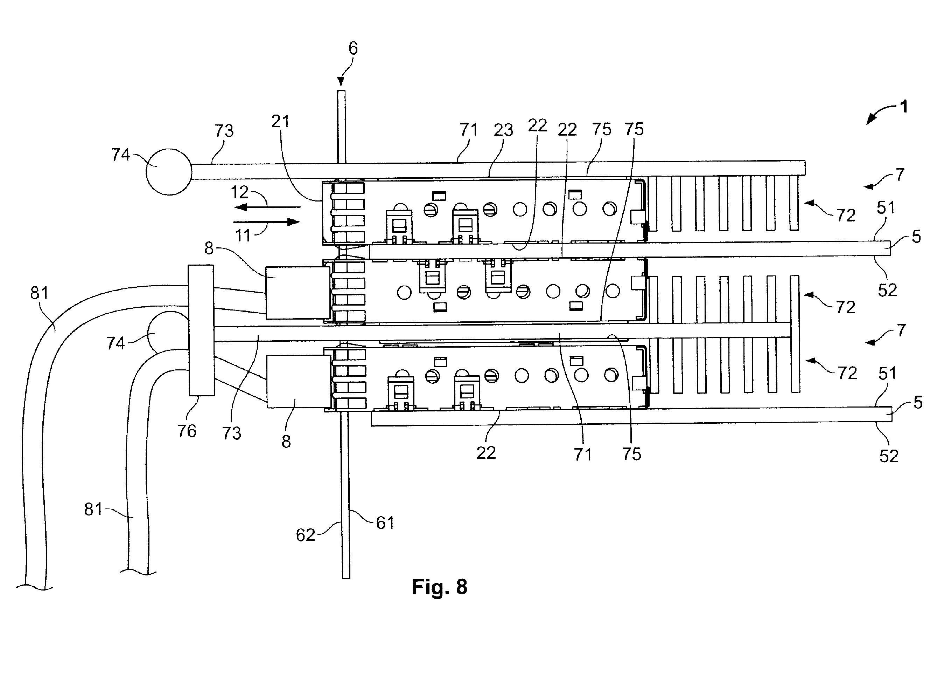

The fourth embodiment of the invention as described in the following with reference to Figs. 7 and 8 may be based on one of the embodiments as described above and particularly relates to a heat sink 7 for an input/output connector 2 for high speed electrical and/or optical data interfaces. This heat sink 7 may be incorporated into an input/output connector device 1, which may further comprise an input/output connector 2, a printed circuit board 5 and a housing 6 of electronic equipment which at least partially accommodates the items named above. In the drawings, the housing is again represented by the front panel 6. The input/output connector 2, the printed circuit board 5 and the housing 6 may at least be of the same or similar types as in the preceding embodiments. The visual indicator device 3 is optional in this fourth embodiment and omitted here for ease of description.

The heat sink 7 according to the invention comprises a (first) heat exchange section 71 for heat exchange with the at least one input/output connector 2, as well as a cable management section 73 that is configured to project beyond a mating face 21 of the input/output connector 2 and to manage a cable 81 or a fixture 76 for a cable 81 of a mating input/output connector 8 when the (first) heat exchange section 71 is in heat exchange with the at least one input/output connector 2. A (second) heat exchange section 72 for heat exchange with the periphery may be provided at the end of the heat sink 7 opposite the cable management section 73, such that the first heat exchange section 71 is arranged between the second heat exchange section 72 and the cable management section 73. A central portion of a cooling plate made out of heat conductive material, e.g. copper, may form the (first) heat exchange section 71 for heat exchange with the at least one input/output connector 2. According to a first design alternative of the heat sink 7, a plurality of fins projects from the side of the cooling plate that is configured to connect to the input/output connector 2, so as to form the second heat exchange section 72. According to a second design alternative of the heat sink 7, pluralities of fins project from opposite sides of the cooling plate so as to form the second heat exchange section 72, wherein both sides of the cooling plate are preferably configured to be coupled with one input/output connector 2. As shown in Fig. 7, the heat sink 7 according to the first design alternative is exemplary connected to the uppermost input/output connector 2. The heat sink 7 according to the second design alternative is exemplary arranged between the lower two input/output connectors 2, wherein the first heat exchange section 71 is sandwiched between and thermally coupled to two input/output connectors 2 by means of adhesive thermally conductive material 75.

As shown in Fig. 8, the cable management section 73 comprises a guide and a cable fixture 76 for one or more cables of mating input/output connectors 8, wherein the cable fixture 76 is movable relative to the guide. The cable fixture 76 can be displaced along the guide in the engagement direction 1 1 and/or in the disengagement direction 12 of the mating input/output connector 8 and/or rotated on the guide. A stopper 74 for restricting movement of the cable fixture 76 is located at the end of the cable management section 73 projecting from the front panel 6 and the mating face 21 of the input/output connector 2, respectively. The cable fixture 76 may clamp one or more cables 81 of mating input/output connectors 8 when connected to and/or disconnected from the corresponding input/output connector 2.

The present invention significantly improves thermal management in the field of input/output connectors for high speed electrical and/or optical data interfaces, and is not limited to the embodiments described above. Further preferable embodiments may result from combinations of the features and embodiments disclosed in the claims, drawings and description.

## Claims

1. A visual indicator device for an input/output connector for mounting to a printed circuit board, the visual indicator device comprising a visual indicator and a flexible film circuit with integral circuit traces for electrically connecting the visual indicator to the printed circuit board, wherein the flexible film circuit comprises an adhesive film.

2. The visual indicator device according to claim 1, wherein the flexible film circuit comprises a heat conducting layer or a heat absorbing layer or a shielding layer, an electromagnetic interference shielding layer, wherein the heat conducting layer or the heat absorbing layer or the shielding layer is arranged between the integral circuit traces and the adhesive film or on a side of the integral circuit traces opposite the adhesive film.

3. The visual indicator device according to claim 1, wherein further comprising a connector for electrically connecting the flexible film circuit to the printed circuit board, wherein the connector is block-shaped and arranged on a narrow side of the flexible film circuit.

4. The visual indicator device according to claim 1, wherein the visual indicator comprises at least one light emitting device.

5. The visual indicator device according to claim 4, wherein the light emitting device is a light emitting diode.

6. The visual indicator device according to claim 1, wherein the input/output connector is a female connector, jack receptacle connector or socket.

7. An Input/output connector device comprising at least one visual indicator device and at least one input/output connector mounted to a printed circuit board, wherein an adhesive film adheres to the input/output connector and/or to the printed circuit board and/or to a housing or part of a housing of electronic equipment which at least partially accommodates the input/output connector wherein the adhesive film adheres to a face opposite to a mounting face of the input/output connector and/or to a mounting face of the printed circuit board and/or to an inner side of a front panel of the housing.

8. The input/output connector device according to claim 7, wherein the input/output connector projects from the housing of electronic equipment, though an opening in the front panel of the housing.

9. A heat sink for at least one input/output connector, comprising a heat exchange section for heat exchange with the at least one input/output connector, the heat sink further comprising a cable management section that is configured to project beyond a mating face of the input/output connector and to manage a cable or a fixture for a cable of a mating input/output connector when the heat exchange section is coupled with the at least one input/output connector.

10. The heat sink according to claim 9, further comprising a heat exchange section for heat exchange with the periphery, wherein the heat exchange section for heat exchange with the at least one input/output connector is preferably arranged between the a heat exchange section for heat exchange with the periphery and the cable management section.

11. The heat sink according to claim 9, comprising a cooling plate that is made from heat conductive material, wherein the cooling plate or a part thereof forms the heat exchange section for heat exchange with the at least one input/output connector, wherein a plurality of cooling fins projecting from at least one side of the cooling plate forms the heat exchange section for heat exchange with the periphery, wherein the cooling fins preferably project from a side of the cooling plate that is configured to be coupled with the input/output connector and/or from an opposite side thereof.

12. The heat sink according to claim 9, wherein the heat exchange section for heat exchange with the at least one input/output connector is configured to be coupled with or sandwiched between two input/output connectors.

13. The heat sink according to claim 9, wherein the cable management section comprises a cable fixture, preferably a cable fixture movable relative to a guide, wherein the cable fixture is most preferably displaceable along the guide in the engagement direction and/or in the disengagement direction of the mating input/output connector.

14. The heat sink according to claim 9, wherein the cable management section comprises a stopper for restricting movement of the cable fixture in the engagement direction and/or in the disengagement direction of the mating input/output connector.

15. An input/output connector device comprising a heat sink, wherein a heat exchange section for heat exchange with the at least one input/output connector is interposed between and thermally coupled to two input/output connectors, by means of adhesive thermally conductive material.

16. An input/output connector device comprising at least one input/output connector, at least one visual indicator device and at least one heat sink.
